# EUROPEAN PATENT SPECIFICATION

(11) **EP 3 006 651 B1**
(45) Date of publication and mention of the grant of the patent: **28.03.2018**
(21) Application number: 14807529.4
(22) Date of filing: 02.06.2014
(51) Int. Cl.: E05B 15/00, B60R 25/021, B60R 25/22, E05B 29/04, E05B 83/00

(54) **CYLINDER LOCK**
ZYLINDERSCHLOSS
SERRURE À BARILLET

(30) Priority: 03.06.2013 JP 2013116724
(43) Date of publication of application: 13.04.2016
(73) Proprietor: Alpha Corporation, Yokohama-shi, Kanagawa 236-0004 (JP)
(72) Inventor: KISO, Toshikazu, Yokohama City Kanagawa 236-0004 (JP); YOSHIZAWA, Takashi, Yokohama City Kanagawa 236-0004 (JP); WATANUKI, Yoshio, Atsugi-shi Kanagawa 243-0123 (JP)
(74) Representative: Reeve, Nicholas Edward
(86) International application number: PCT/JP2014/064585
(87) International publication number: WO 2014/196494

(56) References cited:
- EP-A2- 1 632 624
- JP-A- H09 254 844
- JP-B2- 3 330 728
- JP-B2- 4 665 248
- JP-B2- 4 884 282
- JP-U- H0 512 558
- US-A1- 2011 265 531

## Description

### Technical Field

The present invention relates to a cylinder lock.

### Background Art

A cylinder lock described in Japanese Patent Application Publication No. Hei 9-254844 has been known as a cylinder lock which has achieved enhanced robustness against inappropriate unlocking. In this conventional example, the cylinder lock is formed by rotatably inserting a cylinder section (plug) into a lock outer tube (case). When the plug is turned using an authentic unlocking key, a crankshaft coupled to the rear end of the plug is turned, and a lock pin is actuated by the turn of the crankshaft.

The plug includes a fuse groove at a front end section and includes recesses at the rear end. The plug and the crankshaft are coupled to each other in the turning direction by flanges on the crankshaft locking to the recesses in the plug.

When an inappropriate rotational operating force is applied to the cylinder lock, the plug is twisted off at the fuse groove. If one tries to force a screw driver or the like into a key groove and turn the plug from the above state, the flanges of the crankshaft are fractured in shear by the push-in force applied to the plug. Once the flanges are fractured, the rotational operating force on the plug can no longer be transmitted to the crankshaft, and the lock pin cannot be actuated.

Here, in the above conventional example, the movement of the plug towards the rear is restricted by the flanges of the crankshaft. For this reason, there is a problem in that the flanges are readily fractured in shear and the cylinder lock becomes inoperable when a head section of the plug is struck as a result of tampering or the like.

EP1632624 discloses a cylinder lock with an antitorque security device. US2011/0265531 discussed a cylindrical lock having a locking core which separates into two portions when the locking core is struck along or across its axis.

We have appreciated that it would be desirable to address the above drawback, and provide a cylinder lock which has excellent anti-theft performance and does not readily become inoperable as a result of tampering or the like.

### SUMMARY OF THE INVENTION

According to the present invention, a cylinder lock is provided, the cylinder lock formed by inserting a plug 3 into a plug insertion hole 2 in a case 1, the plug 3 being capable of being turned with an authentic unlocking key, in wherein in the case 1, a first restricting section 5 and a second restricting section 7 are provided, the first restricting section 5 being configured to lock to a first stopper 4 formed at a front end section of the plug 3 and thereby restrict movement of the plug 3 towards a rear, the second restricting section 7 being configured to lock, as a result of movement of the plug 3 towards the rear, to a second stopper 6 formed at a rear end section of the plug 3 and thereby restrict turning of the plug 3, and a fuse section 8 configured to break due to a prescribed torsional load is provided at an intermediate section between the first stopper 4 and the second stopper 6 of the plug 3, wherein the second restricting section 7 projects into the plug insertion hole 2 to thereby lock to a stopper groove 9 formed in the plug 3 and restrict movement of the plug 3 in a direction of removal thereof, and the second stopper 6, which is configured to lock to the second restricting section 7 in a turning direction when the plug 3 is moved towards the rear, is formed at a front end section of the stopper groove 9.

In the present invention, when an inappropriate unlocking rotational force is applied to the plug 3, the fuse section 8, which is disposed at the intermediate section between the first stopper 4 and the second stopper 6, breaks and thereby separates the section where the first stopper 4 is formed and the section where the second stopper 6 is formed. Once these sections are separated, inappropriate unlocking cannot be done via operation on the front end section of the plug 3.

To turn the remaining section of the plug 3 after the broken front end section of the plug 3 is removed from the above state, it is necessary to press a tool such as a screw driver against a key insertion groove 10 in the plug 3 or the like, which results in generation of a push-in force towards the rear. The plug 3, now without the first stopper 4, which restricts movement towards the rear, is moved towards the rear by this push-in force and the second stopper 6 locks to the second restricting section 7 of the case 1. Once the second stopper 6 locks to the second restricting section 7, turning of the plug 3 is restricted.

Thus, in the present invention, the breakage at the fuse section 8 is the condition that allows the movement of the plug 3 towards the rear, and application of an inappropriate push-in force to the plug 3 is not a condition that allows the movement of the plug 3 towards the rear. This means that the first stopper 4 and the first restricting section 5 can be formed to have enough strength against push-in operating force. Hence, the robustness against tampering and the like in the push-in direction can be improved.

In the present invention, the removal of the plug 3 from the case 1 is restricted by causing the second restricting section 7 to lock to the stopper groove 9. The second restricting section 7, which projects into the plug insertion hole 2, can be formed simply by inserting a pin, a plate, or the like from a side wall of the case 1. Thus, the removal of the plug 3 can be prevented with a simple structure, and the second stopper 6 can be easily formed in the stopper groove 9. Hence, the entire structure can be made simpler.

The second stopper 6 may be formed directly on the wall face of the stopper groove 9. However, the second stopper 6 can be formed by mounting a clip-shaped member 12 in the stopper groove 9. By forming the second stopper 6 in this manner, the entire structure can be made simple.

Further, the cylinder lock may be configured such that a guard plate 11 configured to restrict insertion of a tool such as a screw driver into the key insertion groove 10 is mounted at a front end of the plug 3. In this case, it is possible to completely prevent a situation where a screw driver or the like is deeply inserted beyond the fuse section 8 and the plug 3 is inappropriately turned. Hence, the robustness against inappropriate unlocking can be further enhanced.

According to the present invention, the fuse section breaks upon inappropriate unlocking, and the plug cannot be turned after the breakage as well. Hence, anti-theft performance can be enhanced. Moreover, the plug is not readily fractured by the striking of the head section of the plug. Hence, the robustness against tampering and the like can be enhanced.

### BRIEF DESCRIPTION OF THE DRAWINGS

Fig. 1 is a set of views showing a steering lock device, and part (a) is a front view and part (b) is a cross-sectional view.
Fig. 2 is a set of views showing a cylinder lock, and part (a) is a longitudinal cross-sectional view, part (b) is a cross-sectional view taken along line 2B-2B in part (a), and part (c) is a cross-sectional view taken along line 2C-2C in part (a).
Fig. 3 is a set of views showing the operation of the present invention, and part (a) is a cross-sectional view showing a state where a head section of a plug has broken, part (b) is a cross-sectional view showing a state where the remaining section of the plug has retreated, and part (c) is a cross-sectional view taken along line 3C-3C in part (b).

### DETAILED DESCRIPTION OF EXAMPLE EMBODIMENTS

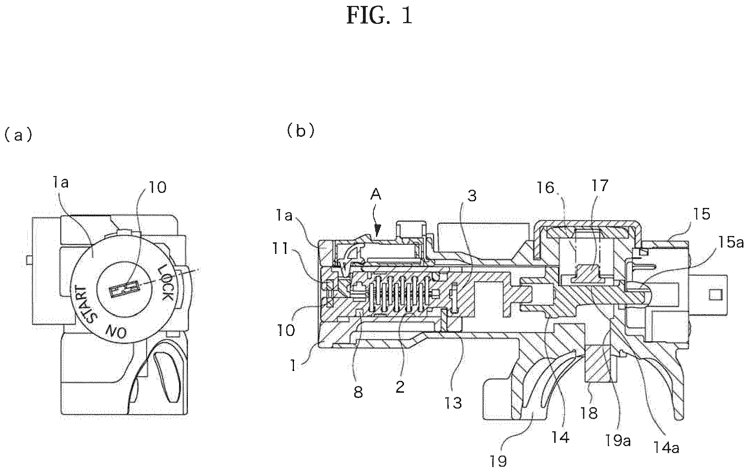

Fig. 1 and the following figures show an embodiment of the present invention incorporated in a steering lock device. A cylinder lock (A) is formed by rotatably inserting a plug 3 in a case 1 and is fixed at a front end section of a frame 13.

A drive shaft 14 is coupled to a rear end section of the plug 3 in such a manner as to be capable of turning along with the plug 3. When the plug 3 is turned, a rotation shaft 15a of an ignition switch 15 which is fixed to the rear end of the frame 13 is turned through the drive shaft 14. Thus, the contact of a switch can be switched.

As shown in part (a) of Fig. 1, a position indicating section la is formed at a front end section of the case 1. With position indicating marks such as "LOCK" indicated on the position indicating section la, one can recognize the switch state of the ignition switch 15.

Also, a hanger rod 17 which is urged by a compression spring 16 in a direction perpendicular to the drive shaft 14 is movably mounted inside the frame 13 and is in pressure contact with a cam section 14a of the drive shaft 14. A lock rod 18 is coupled to the hanger rod 17 and is configured to project from and retreat into a rod projection-retreat hole 19a bored in a column coupling section 19 which is fixed to a steering column not shown, when the hanger rod 17 is moved. In a state where the lock rod 18 projects to the inside of the steering column, the lock rod 18 locks to a steering shaft not shown, thereby restricting operation on the steering.

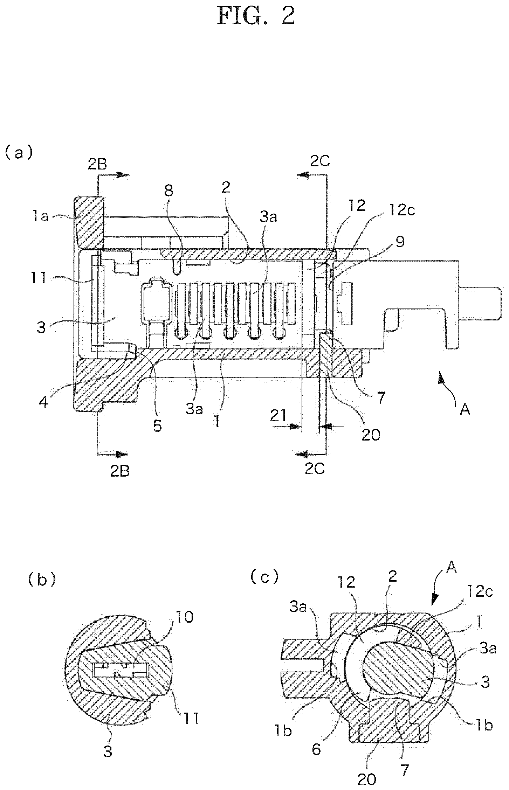

On the other hand, as shown in Fig. 2, an appropriate number of tumblers 3a are mounted in the plug 3 of the cylinder lock (A) radially movably. The tumblers 3a are configured to lock to a locking groove 1b in the case 1 to thereby inhibit turning of the plug 3 while an authentic unlocking key is not inserted in a key insertion groove 10 in the plug 3.

Also, a fuse section 8 is formed in the plug 3 by cutting out an outer peripheral section thereof at a position slightly forward of the tumbler 3a disposed foremost, thereby reducing the cross-sectional area. Further, a guard plate 11 made of hard metal is mounted at the front end, thereby preventing insertion of a tool such as a screw driver into the key insertion groove 10.

Movement of the plug 3 configured as above towards the rear is restricted by causing a first stopper 4 that bulges at a front end section to lock to a first restricting section 5 of the case 1, whereas movement of the plug 3 towards the front is restricted by causing a second restricting section 7 to lock to a stopper groove 9 formed at the rear end section of the plug 3. Thus, longitudinal movement of the plug 3 inside the case 1 is restricted in both directions towards the front and towards the rear.

As shown in part (c) of Fig. 2, the second restricting section 7 is formed by inserting a steel plate body 20 inwardly from an outer wall section of the case 1. In a normal use state where the first stopper 4 is disposed on the first restricting section 5, the rearwardly facing wall face of the plate body 20 is in contact with the forwardly facing wall face of the stopper groove 9, so that the plug 3 is prevented from being pulled towards the front. Also, a space 21 for relative movement of the plug 3 towards the rear is provided between the forwardly facing wall face of the plate body 20 and the rearwardly facing wall face of the stopper groove 9 (see part (a) of Fig. 2).

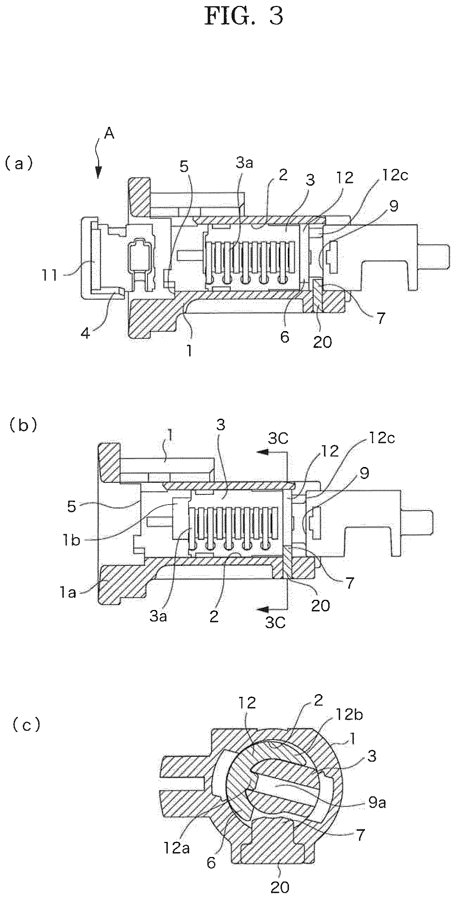

Further, a second stopper 6 is formed by mounting a clip-shaped member 12 on the front end face of the stopper groove 9. As shown in part (c) of Fig. 3, the clip-shaped member 12 is mounted in the stopper groove 9 such that: turning of the clip-shaped member 12 relative to the plug 3 is restricted by a protrusion 12a fitted in a fitting hole 9a formed in the peripheral wall of the plug 3 and by an extended piece 12b extended along the peripheral wall of the stopper groove 9 on one side; and leaning of the clip-shaped member 12 is restricted by a protrusion 12c protruding from the extended piece 12b in the longitudinal direction of the plug 3 and set in contact with the peripheral wall of the stopper groove 9.

Thus, in this embodiment, when one tries to inappropriately turn the plug 3 by inserting a screw driver or the like into the key insertion groove 10, torsional stress is concentrated at the fuse section 8 disposed between a rear section of the plug 3 the turning of which is restricted by the tumblers 3a and a head section of the plug 3 which is allowed to freely turn, so that the plug 3 breaks from the fuse section 8 (see part (a) of Fig. 3).

With the head section of the plug 3 broken, the rotational operating force on the head section of the plug 3 can no longer be transmitted to the rear section. Further, the presence of the guard plate 11 restricts insertion of a tool such as a screw driver into the key insertion groove 10 from the above state. Then, to inappropriately unlock the steering lock device, as shown in part (b) of Fig. 3, it is necessary to take out the broken head section and then insert a screw driver or the like into the key insertion groove 10 of the remaining section and turn the remaining section.

In order to turn the remaining section of the plug 3 whose outer periphery is in contact with the peripheral wall of the case 1 and therefore impossible to grab, it is necessary to insert a screw driver or the like into the key insertion groove 10. The remaining section of the plug 3, which is now released from the restriction of rearward movement by the first stopper 4 with the head section broken, is moved towards the rear by insertion of a screw driver or the like, as shown in part (b) of Fig. 3.

The remaining section is moved towards the rear in a translatory manner such that the tumblers 3a projecting from the plug 3 are guided by the locking groove 1b of the case 1. As a result, as shown in part (c) of Fig. 3, the second stopper 6 locks to the second restricting section 7 at the end of the path of the movement, thereby restricting turning of the plug 3. Hence, inappropriate unlocking is inhibited.

### Explanation Of Reference Numerals

- 1: CASE
- 2: PLUG INSERTION HOLE
- 3: PLUG
- 4: FIRST STOPPER
- 5: FIRST RESTRICTING SECTION
- 6: SECOND STOPPER
- 7: SECOND RESTRICTING SECTION
- 8: FUSE SECTION
- 9: STOPPER GROOVE
- 10: KEY INSERTION GROOVE
- 11: GUARD PLATE
- 12: CLIP-SHAPED MEMBER
- A: CYLINDER LOCK

## Claims

1. A cylinder lock formed by inserting a plug (3) into a plug insertion hole (2) in a case (1), the plug (3) being capable of being turned with an authentic unlocking key, wherein
in the case (1), a first restricting section (5) and a second restricting section (7) are provided, the first restricting section (5) being configured to lock to a first stopper (4) formed at a front end section of the plug (3) and thereby restrict movement of the plug (3) towards a rear, the second restricting section (7) being configured to lock, as a result of movement of the plug (3) towards the rear, to a second stopper (6) formed at a rear end section of the plug and thereby restrict turning of the plug (3), and
a fuse section (8) configured to break due to a prescribed torsional load is provided at an intermediate section between the first stopper (4) and the second stopper (6) of the plug;
wherein
the second restricting section (7) projects into the plug insertion hole (2) to thereby lock to a stopper groove (9) formed in the plug (3) and restrict movement of the plug (3) in a direction of removal thereof, and
the second stopper (6), which is configured to lock to the second restricting section (7) in a turning direction when the plug (3) is moved towards the rear, is formed at a front end section of the stopper groove (9).

2. The cylinder lock according to claim 1, wherein the second stopper (6) is formed by mounting a clip-shaped member into the stopper groove (9).

3. The cylinder lock according to claim 1, wherein a guard plate (11) configured to restrict insertion of a widening member into a key insertion groove is mounted at a front end of the plug.

## Patentansprüche

1. Zylinderschloss, gebildet durch Einsetzen eines Steckers (3) in ein Steckereinsetzloch (2) in einem Gehäuse (1), wobei der Stecker (3) mit einem authentischen Entriegelungsschlüssel gedreht werden kann, wobei
im Gehäuse (1) ein erster Begrenzungsabschnitt (5) und ein zweiter Begrenzungsabschnitt (7) vorgesehen sind, wobei der erste Begrenzungsabschnitt (5) zum Arretieren an einem ersten Anschlag (4) konfiguriert ist, ausgebildet an einem vorderen Endabschnitt des Steckers (3), um dadurch eine Bewegung des Steckers (3) nach hinten zu begrenzen, wobei der zweite Begrenzungsabschnitt (7) zum Arretieren, infolge einer Bewegung des Steckers (3) nach hinten, an einem zweiten Anschlag (6) konfiguriert ist, der an einem hinteren Endabschnitt des Steckers ausgebildet ist und dadurch ein Drehen des Steckers (3) beschränkt, und
einen Sicherungsabschnitt (8), der so konfiguriert ist, dass er bricht, wenn eine vorgeschriebene Torsionslast an einem Zwischenabschnitt zwischen dem ersten Anschlag (4) und dem zweiten Anschlag (6) des Steckers aufgebracht wird;
wobei
der zweite Begrenzungsabschnitt (7) in das Steckereinsetzloch (2) vorsteht, um dadurch an einer im Stecker (3) ausgebildeten Anschlagnut (9) zu arretieren und eine Bewegung des Steckers (3) in einer Entfernungsrichtung davon zu begrenzen, und
der zweite Anschlag (6), der zum Arretieren auf den zweiten Begrenzungsabschnitt (7) in einer Drehrichtung konfiguriert ist, wenn der Stecker (3) nach hinten bewegt wird, in einem vorderen Endabschnitt der Anschlagnut (9) ausgebildet ist.

2. Zylinderschloss nach Anspruch 1, wobei der zweite Anschlag (6) durch Montieren eines klammerförmigen Elements in der Anschlagnut (9) ausgebildet ist.

3. Zylinderschloss nach Anspruch 1, wobei eine Schutzplatte (11), konfiguriert zum Begrenzen des Einführens eines Erweiterungselements in eine Schlüsseleinführungsnut, an einem vorderen Ende des Steckers montiert ist.

## Revendications

1. Serrure à barillet formée en introduisant une goupille (3) dans un trou d'introduction de goupille (2) dans un boîtier (1), la goupille (3) étant capable d'être tournée avec une clé de déverrouillage authentique, dans laquelle
dans le boîtier (1), une première section de restriction (5) et une deuxième section de restriction (7) sont fournies, la première section de restriction (5) étant configurée pour se caler contre une première butée (4) formée à une section d'extrémité avant de la goupille (3) et restreignant ainsi le mouvement de la goupille (3) vers l'arrière, la deuxième section de restriction (7) étant configurée pour se caler, suite au mouvement de la goupille (3) vers l'arrière, contre une deuxième butée (6) formée à une section d'extrémité arrière de la goupille et restreignant ainsi la rotation de la goupille (3), et
une section de fusible (8) configurée pour se rompre dû à une charge en torsion prescrite, est fournie à une section intermédiaire entre la première butée (4) et la deuxième butée (4) de la goupille ;
dans laquelle
la deuxième section de restriction (7) fait saillie dans le trou d'introduction de goupille (2) pour se caler ainsi contre une rainure de butée (9) formée dans la goupille (3) et restreindre le mouvement de la goupille (3) dans la direction de retrait de celle-ci, et
la deuxième butée (6), qui est configurée pour se caler contre la deuxième section de restriction (7) dans une direction de rotation lorsque la goupille (3) est déplacée vers l'arrière, est formée à une section d'extrémité avant de la rainure de butée (9).

2. Serrure à barillet selon la revendication 1, dans laquelle la deuxième butée (6) est formée en montant un membre en forme de clip dans la rainure de butée (9).

3. Serrure à barillet selon la revendication 1, dans laquelle une plaque de garde (11) configurée pour restreindre l'introduction d'un membre d'élargissement dans la rainure d'introduction de clé, est montée à une extrémité avant de la goupille.
